# EUROPEAN PATENT APPLICATION

(11) **EP 1 215 629 A2**
(43) Date of publication of application: **19.06.2002**
(21) Application number: 01129244.8
(22) Date of filing: 11.12.2001
(51) Int. Cl.: G06T 17/00

(54) **Three-dimensional model simulator**

(30) Priority: 11.12.2000 JP 2000376276
(71) Applicant: K-Plex Inc., San Jose, CA 95134 (US); Papyrus Computer System Inc., Tokyo (JP)
(72) Inventor: Oikawa, Kazushige, San Jose, CA 95134 (US); Tanaka, Yazuru, Sappori-shi, Hokkaido (JP); Teruuchi, Tomoru, San Jose, CA 95134 (US)
(74) Representative: HOFFMANN - EITLE

(57) **Abstract**

A three-dimensional object shape model simulator system is provided. The system represents three-dimensional object shape models in such a form as to allow the models to be reused and efficiently managed in a database to implement flexible simulations.

The three-dimensional object shape model is built from two objects, i.e., an object which has data related to properties of a three-dimensional object of interest ("model object") and an object having data required to display the object ("display object"). Further, the data in a plurality of model objects are made such that they are associated with each other.

## Description

The present invention relates generally to a three-dimensional model simulator, and more particularly, to a system for managing data of a three dimension shape model using a database facility.

In conventional modeling of a three-dimensional object shape, the model is represented as a single composite object including coordinate values of a target three-dimensional object and its attribute values for display, whereby the management of three-dimensional object shape models becomes very simple.

However, since a composite object can be used for representing only a model corresponding to the composite object, in order to represent another model which differs from the model only in a certain attribute value and is fundamentally the same as the model, an additional object which is almost identical with the composite object except for the attribute value is required. Therefore, the more the number of models to be represented increases, the more the number of objects, i.e., the amount of data, linearly increases, which results in less available storage capacity of the system.

Further, mere modification of display (view) of a model requires modification of an object per se of the model. Therefore, for example, when object data is stored in a database for management, a high overhead for operations such as input/output involved in the modification is incurred and the simulation processing efficiency deteriorates.

It is an object of the present invention to provide a three-dimensional model simulator for representing three dimension object shape models which are reusable and efficiently manageable by using a database system and for implementing flexible simulations using such object.

In the present invention, a three dimensional object shape model is made from two objects, i.e., an object having data related to the properties of the target three-dimensional object (hereinafter referred to as "model object") and an object having data required to display the three-dimensional object (hereafter referred to as "display object"). Further, the present invention enables cooperation of a plurality of model objects by effecting interaction of the data contained therein.
Fig. 1 is a block diagram describing a system environment of the present invention;
Fig. 2 is a schematic diagram illustrating an object according to the present invention;
Fig. 3 is a schematic diagram illustrating a rotational object according to the present invention;
Fig. 4 is a diagram illustrating a flow of messages when a parent object is changed in accordance with the present invention; and
Fig. 5 is a diagram illustrating a flow of messages when a child object is changed in accordance with the present invention.

A preferred embodiment of the present invention will be described with reference to the accompanying drawings.

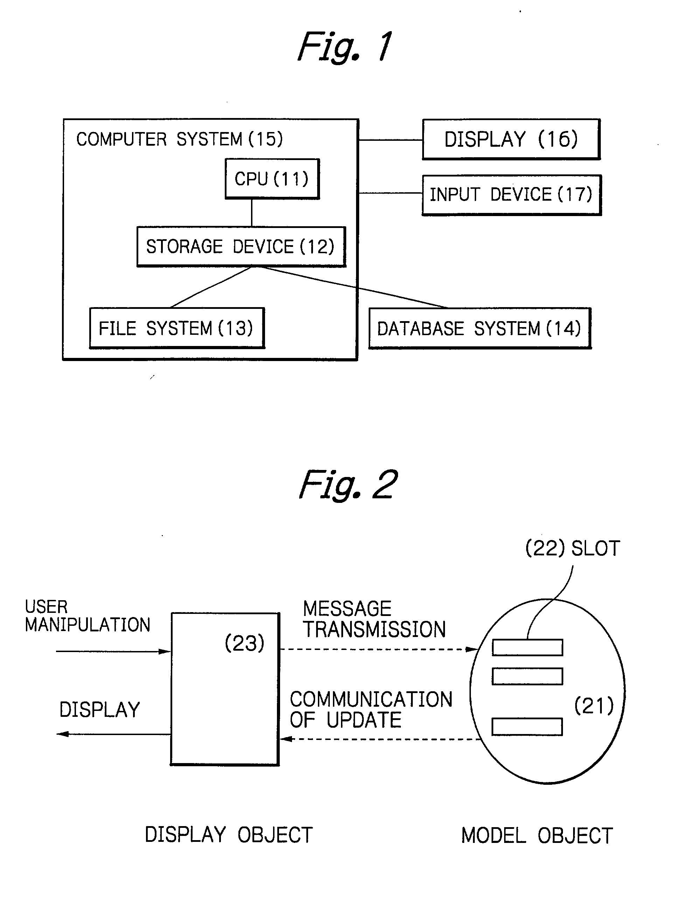

Fig. 1 is a block diagram describing a system environment for implementing a simulator according to the present invention. Referring to Fig. 1, a computer system 15 comprises a CPU 11, a storage device 12, and a file system 13, and is connected to a database system 14, a display 16 and an input device 17. The database system 14 may be either a system directly coupled to the computer system 15 or a distributed network database system having its own CPU and so on and is connected to the computer system 15 through a communication line.

In this system environment, an object configured as shown in Fig. 2 is implemented for representing a three-dimensional shaped model.

Referring to Fig. 2, a model object 21 holds data (internal status) related to the properties of a three-dimensional object of a simulation target, and methods related thereto. Among the data, data kept available for reference and updating from the outside of the model object is named as "slot" 22. A display object 23 holds data (display properties) required to display a three-dimensional object held by a model object 21, and methods related thereto. The display object 23 receives a manipulation event from the user and displays the three-dimensional object of the simulation target in conjunction with the model object 21 for a user.

The model object 21 can synthesize a plurality of three-dimensionally shaped models by means of "slot linking", which will be described later.

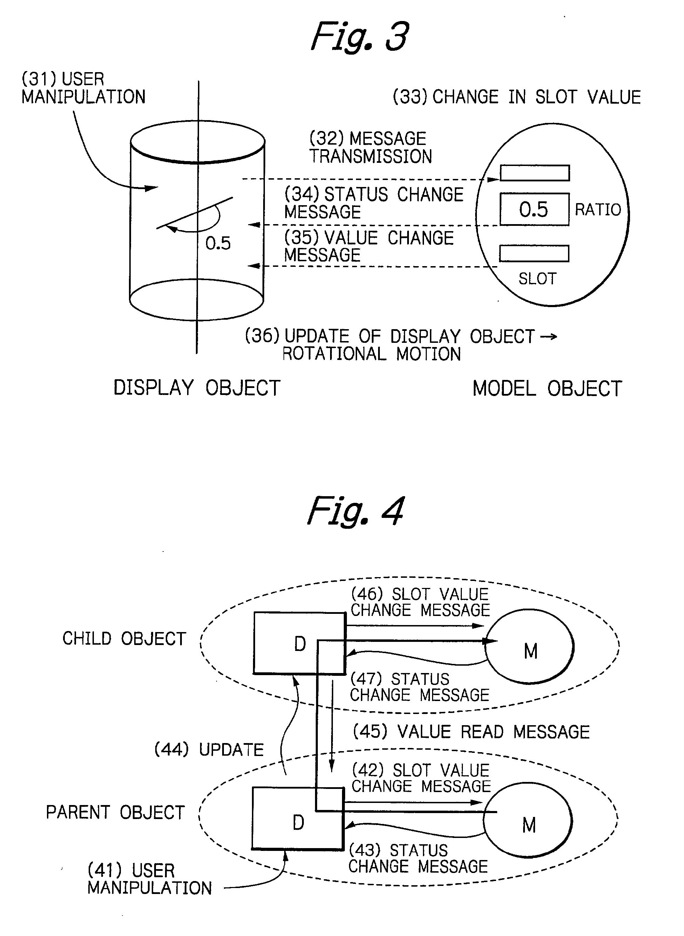

Referring next to Fig. 3, a linkage operation between a model object representing a three-dimensional object that rotates and its display object will be explained as an example.

When a user event (user manipulation) is received, etc., these objects (model object, display object) communicate to notify each other of the change in their conditions. The example shown in Fig. 3 is a "rotating object" wherein the displayed three-dimensional object receives a rotation manipulation. In Fig. 3, the numerals from (31) to (36) indicate a process flow involved in the linkage operation performed by the model object and its display object constituting the rotating object.

### User Manipulation (31):

A user directs rotation manipulation to the display object by using the input device 17. It is assumed here that the directed rotation is a 180-degree rotation (in the present system, it is handled as 0.5 with a 360-degree rotation being defined as 1).

### Message Transmission (32):

By means of message transmission, the display object informs the model object that a 180 degree-rotation manipulation has been directed.

### Slot Value Change (33):

Upon receipt of the message, the model object changes the value of a ratio slot indicative of an angle of rotation (a value, which was zero before the change, is changed to 0.5).

Here, if the rotating object is defined, for example, as an object which does not allow rotation of 360 degrees or more, the model object can check the message received from the display object and if it is more than 360 degrees, a control operation for aborting the subsequent process of this procedure can be performed.

### Status Change Message (34):

In this example, the model object informs the display object that a change of status of the model object has occurred, the slot value has been changed.

### Value Change Message (35):

The model object informs the display object of the value associated with the status change by a message.

### Display Object Update (36):

The display object updates the display of the rotating object model, reflecting the changed status by using the value supplied by the model object.

According to a conventional three-dimensional modeling system, it is possible to combine plural objects and handle the objects as a single object.

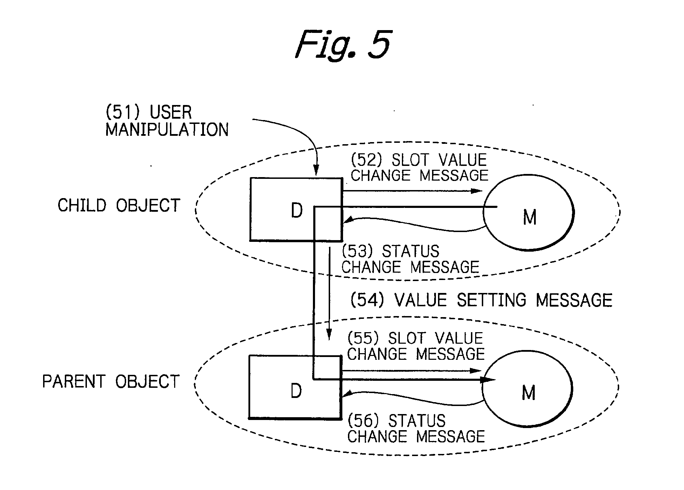

In the subject invention, the'object represents the properties of the three dimensional model to be simulated by its slots and their values in the model object, and the objects can be synthesized by linking the slots between their model objects (hereafter referred to as "slot linking"). The slot linking is implemented by establishing communication using standard messages for this purpose between the objects. Fig. 4 and Fig. 5 indicate a communication protocol for the slot linking between objects, and communications between the display object and the model object in each object. Since the operations within the display object and model object are similar to those described with reference to Fig. 3, description thereof is omitted from these drawings for the sake of brevity of explanation. As illustrated, there is a parent-child relationship between synthesized objects and the display coordinate system of the child object depends on that of the parent object. For example, when a change such as movement, rotation, enlargement or reduction is effected on the coordinate system of the parent object, the child object changes entirely according to the parent's change. Either the parent object slot value change or the child object slot value change can be individually set up to affect the synthesized object.

Fig. 4 illustrates the case where the parent object informs the child object of a change in a slot value in its own model object.

### User Manipulation (41):

A user directs manipulation to the display object of the parent object by using the input device 17.

### Slot Value Change Message (42):

The display object informs the model object of the parent object of the details of user manipulation.

### Status Change Message (43):

In this example, the model object of the parent object informs its own display object that a change of status of the model object has occurred, the slot value has been changed.

### Update Message (44):

The parent object informs the child object of change in its slot value.

### Value Read Message (45):

Upon receipt of the information, the child object specifies the slot of the parent object in question and reads its value.

### Slot Value Change Message (46):

The display object of the child object informs its own model object of the value read from the parent object.

### Status Change Message (47):

In this example, the model object of the child object informs the display object that a change of status of the model object has occurred, the slot value has been changed.

Fig. 5 illustrates that the child object requests the parent object to change a slot value when a slot value in its own model object has been changed.

### User Manipulation (51):

A user directs manipulation to the display object of the child object by using the input device 17.

### Slot value Change Message (52):

The display object informs the model object of the child object of the details of user manipulation.

### Status Change Message (53):

In this example, the model object informs the display object that a change of status of the model object has occurred, the slot value has been changed.

### Setting Message (54):

The child object specifies a slot of the parent object and requests the parent object to change the value of the slot.

### Slot Value Change Message (55):

The display object of the parent object informs its own model object of a change in the value in response to the request from the child object.

### Status Change Message (56):

In this example, the model object of the parent object informs its own display object that a change of status of the model object has occurred, the slot value has been changed.

Usually, created objects are retained for ready use on the storage device 12 and kept in the file system 13 for temporary storage. The status prior to the storage can be restored by reading-out the stored file from the file system and retaining all the contents of the file for ready use on the storage device. Eventually, the object is archived in the database system 14 for permanent storage. In the system of this invention, only the display object part of the object may be retained on the storage device 12 with the model object part being left in the database system 14, whereby the operation similar to the full retention for ready use in the storage device 12 can be effected by communicating the aforementioned procedure between these objects. By employing such a configuration as described above, the three-dimensional model simulator of this invention can operate effectively and efficiently even in the environment of a distributed networking system.

As is described above, representation of a three-dimensional object shape model by a set of two objects, a model object and a display object as described above, makes it possible to manage and modify the properties and display (view) of the simulated object independently of each other.

Also, with the object configuration as described, simulation of a three-dimensional object shape model can be achieved by using only a generic simulation program for the model object independent of display data. In other words, the need for providing a program dependent on particular display data is eliminated.

Further, since the simulation functions of the objects can be synthesized with each other by slot linking in this invention, the present invention can provide more than just the usual capabilities of a three-dimensional modeling system. For example, simply by defining the above mentioned rotating object as a gear, creating another object representing a vertically movable arm and linking the objects, an object such as an arm which vertically moves according to the rotation of the gear can be synthesized.

Although in the prior art a single three-dimensional object is internally represented as a single object, the present invention represents a three-dimensional object by using two independent objects, thereby enabling efficient re-use of the object.

## Claims

1. A three-dimensional model simulator **characterized in that** a three dimension shape model is formed from two objects, model object having data related to properties of a target three-dimensional shape and a display object having data required to display the shape.

2. A three-dimensional model simulator according to claim 1, said model object having plural slots holding data related to said properties, wherein said slots are linked to slots of the other object to synthesize a plural number of three-dimensional shaped models.

3. A three-dimensional model simulator according to claim 1, including a generic processing program in accordance with the properties of the target three-dimensional shape of interest.

4. A three-dimensional model simulator according to claim 1, wherein said simulator is implemented on a computer system having a local file system and a database system, wherein said model object is managed on said database system, and said display object is managed on said file system.

5. A three-dimensional model simulator according to claim 4, wherein said computer system is a distributed networking computer system.
